# EUROPÄISCHE PATENTANMELDUNG

(11) **EP 1 046 847 A2**
(43) Veröffentlichungstag der Anmeldung: **25.10.2000**
(21) Anmeldenummer: 00104490.8
(22) Anmeldetag: 09.03.2000
(51) Int. Cl.: F16K 31/54

(54) **Ventileinrichtung mit radial ansetzender Betätigungseinrichtung**

(30) Priorität: 21.04.1999 DE 29907096 U
(71) Anmelder: KERMI GmbH, 94447 Plattling (DE)
(72) Erfinder: Seidl, Hermann, 94522 Wallersdorf (DE)
(74) Vertreter: Schwabe - Sandmair - Marx

(57) **Zusammenfassung**

Die Erfindung betrifft eine Ventileinrichtung (100), insbesondere für Heiz- bzw. Kühlkörper, mit einem Ventilabschnitt (110) mit einem Ventilstift (126) mit einem Stellabschnitt mit einer Betätigungseinrichtung (122), wobei die Betätigungseinrichtung (122) in einem Winkel von ca. 90° zu dem Ventilstift (126) angeordnet ist, wobei eine Stellübertragungsmechanik vorgesehen ist, um eine mit dem Stellabschnitt vorgenommene Einstellung auf den Ventilstift zu übertragen, wobei die Stellübertragungsmechanik eine Stellspindel (128,129) umfasst.

## Beschreibung

Die Erfindung betrifft eine Ventileinrichtung, insbesondere für Heiz- bzw. Kühlkörper gemäß dem Anspruch 1, wobei diese einen Ventilabschnitt mit einem Ventilstift und einen Stellabschnitt mit einer Betätigungseinrichtung umfaßt.

In jüngerer Zeit werden neue Heizkörper mit einem positiven äußeren Erscheinungsbild im Markt immer häufiger verlangt. Derartige Heizkörper weisen nicht selten Verkleidungen auf, die vom Design her wenig anspruchsvolle Anschlußbereiche des betreffenden Design-Heizkörpers verdecken sollen. Die Verkleidungen bzw. Blenden weisen in der Regel Ventildurchbrüche auf, durch die die Thermostatabschnitte der Ventile bzw. die Betätigungseinrichtungen der Ventile aus der Verkleidung hervorstehen. Da die Ventile bzw. Thermostatventile regelmäßig nicht von dem gleichen Hersteller wie die Design-Heizkörper kommen, heben sich die Ventile farblich und vom Design her nachteilig von dem ansonsten positiv gestalteten Heizkörper ab.

Im Stand der Technik hat es Bemühungen gegeben, Ventile so zu gestalten, daß deren Betätigungseinrichtungen vom Design her abweichend bzw. von der Betätigungsrichtung her von der üblichen axialen Ausrichtung abweichend sind.

So ist beispielsweise dem G 93 04 346.5 U1 eine über einen Bowdenzug von einer Betätigungseinrichtung her bedienbares Ventil zu entnehmen. Dieses Ventil bewirkt eine unakzeptable Hysterese und auch die Fertigungskosten eines solchen Ventiles sind beträchtlich.

Die DE 196 19 888.7 A1 offenbart ein Ventil, das über eine entfernte Betätigungseinrichtung bedient werden kann, wobei die Betätigungseinrichtung im rechten Winkel von der Ventil-Thermostatkapsel-Achse absteht. Diese Vorrichtung weist einen komplizierten Stellabschnitt auf, der eine Schlittenführung für eine unrunde Stellscheibe erfordert. Diese Lösung ist zwar regelungstechnisch präzise, ist jedoch vergleichsweise teuer.

Es ist die Aufgabe gemäß der vorliegenden Erfindung, eine Ventileinrichtung vorzuschlagen, die eine Alternative zu bekannten Ventileinrichtungen darstellt und die sich nicht nur kostengünstig herstellen läßt, sondern optisch auch positiv in das Erscheinungsbild eines Heizkörpers und insbesondere eines Design-Heizkörpers integrieren läßt.

Die gemäß der Erfindung zu erzielenden Vorteile beruhen insbesondere darauf, daß der Stellabschnitt der Ventileinrichtung mit Merkmalen gemäß der Erfindung in einem Winkel von ca. 90° zu dem Ventilstift angeordnet ist, wobei eine Stellübertragungsmechanik vorgesehen ist, um eine mit dem Stellabschnitt vorgenommene Einstellung auf den Ventilstift übertragen zu können, wobei die Stellübertragungsmechanik eine Stellspindel umfaßt.

Die Verwendung einer Stellspindel ermöglicht es, in besonders vorteilhafter Weise ein herkömmliches Ventil mit einer herkömmlichen Thermostatpatrone zu kombinieren, wobei die zugehörige Betätigungseinrichtung optisch vorteilhaft an einer Verkleidung bzw. Blende angepaßt werden kann, wobei das gesamte Ventil nebst dem etwa vorhandenen Thermostatabschnitt hinter der Verkleidung bzw. Blende verborgen werden kann.

Hier ist es möglich, durch einfaches Aufstecken einer Abdeckung auf die Betätigungseinrichtung oder eine entsprechende farbliche Gestaltung der Betätigungseinrichtung die Ventileinrichtung optisch optimal in das Erscheinungsbild eines entsprechenden Heizkörpers zu integrieren. Es ist auch möglich, einen Heizkörper mit einer entsprechenden Ventileinrichtung gemäß der Erfindung ab Werk als Komplettlösung mit bereits integriertem Ventil bzw. Thermostatventil zu liefern, so daß eine Endmontage auf einer Baustelle, wo üblicherweise Anschlußgarnituren, eine Ventilgarnitur und der betreffende Heizkörper miteinander an die hauseigene Leitung angeschlossen werden müssen, erübrigt werden kann.

Wie bereits angedeutet, kann die erfindungsgemäße Ventileinrichtung sowohl mit als auch ohne Thermostatabschnitt zum Einsatz gebracht werden, wobei die Stellspindel der Stellübertragungsmechanik die relative Position des Thermostatabschnittes gegenüber dem Ventilstift bzw. die Stellung des Ventilstiftes durch Betätigung der Stellspindel veränderbar ist.

Bevorzugt wird die Stellspindel zwischen dem Thermostatabschnitt und dem Ventilstift angeordnet. Möglich ist es auch noch, den Thermostatabschnitt an den Ventilstift anschließen zu lassen und die Stellspindel auf den Thermostatabschnitt einwirken zu lassen, der den Ventilstift verstellen kann. Beide Varianten lassen eine vorteilhafte Verstellung des Ventils gegebenenfalls unter Einwirkung des Thermostatabschnittes zu.

Dem Ventilteller ist eine Überhubfeder zugeordnet. Diese zwischen dem Thermostatabschnitt und dem Ventilstößel angeordnete Federeinrichtung nimmt von der Thermostatpatrone ausgehende Kräfte auf, wenn das Ventil bereits vollständig geschlossen ist, sich die Thermostatpatrone aber trotzdem weiter ausdehnt. Ohne diese Federeinrichtung könnte es zu Überbelastungen und damit zu Schäden kommen.

Die Abmessungen der Stellspindel des Stellabschnitts können axial bzw. koaxial zum Ventilstößel verändert werden. Diese Veränderung wird über die Betätigungseinrichtung ermöglicht. Eine Verstellung der Betätigungseinrichtung führt zu einer Abmessungsänderung der Stellspindel, insbesondere koaxial zu dem Ventilstößel. Dies verstellt in Folge die Lage des Ventilstößels relativ zu dem Thermostatabschnitt bzw. die Lage des Thermostatabschnittes, je nachdem ob die thermischen Bedingungen dazu führen, daß der Thermostatabschnitt bereits auf den Ventilstößel einwirkt oder nicht.

Eine besonders vorteilhafte Ausführungsform ergibt sich, wenn der Stellabschnitt eine Zahnstange umfaßt, über die auf die Stellspindel insbesondere mittels eines Zahnrades eingewirkt wird. Bei dieser vorteilhaften Ausführungsform ist es möglich, als Betätigungseinrichtung einen Schieberegler vorzusehen, der an die Zahnstange angesetzt ist, um mittels einer linearen Bewegung eine Verstellung der Ventileinrichtung gemäß der vorliegenden Erfindung vornehmen zu können.

Eine weitere, sehr vorteilhafte Ausführungsform ergibt sich, wenn die Zahnstange eine weitere Zahnung aufweist, wobei ein Drehstellknopf mit einer Zahnung vorgesehen ist, die mit der weiteren Zahnung der Zahnstange kämmt, um auf diese Weise eine Drehbewegung eines Drehstellknopfes in eine Bewegung der Zahnstange umzusetzen, die auf die Stellspindel zu deren Verstellung einwirkt. Bei dieser Ausführungsform ist es auch möglich, den Drehstellknopf abzuziehen und die Zahnstange direkt über einen Schieberegler zu betätigen.

Eine weitere, sehr vorteilhafte Ausführungsform ergibt sich, wenn die Stellspindel den Thermostatabschnitt umgibt, beispielsweise in der Form eines Gehäuseabschnittes, und durch Verstellen der Betätigungseinrichtung, insbesondere in der Gestalt eines Drehstellknopfes, der Thermostatabschnitt in Richtung des Ventilstößels bewegt werden kann. Dabei weist der Drehstellknopf eine Zahnung auf, die mit einer Zahnung an einem Stellspindelabschnitt, insbesondere einem Gehäuseteil, kämmt.

Eine besonders vorteilhafte Ausführungsform ergibt sich, wenn eine Federkammer vorgesehen ist, die im Eingriff mit einem Thermostatstößel ist und die die Federeinrichtung bzw. Überhubfeder aufnimmt. Diese Ausführungsform ist besonders in Verbindung mit einem beweglichen Thermostatabschnitt bzw. einer beweglichen Thermostatpatrone zweckmäßig, die insgesamt über die Betätigungseinrichtung gegenüber dem Ventilstößel verstellt wird.

Eine weitere sehr zweckmäßige Ausführungsform ergibt sich, wenn auf der Seite des Thermostatabschnitts, die dem Ventil abgewandt ist, eine Stempeleinrichtung angeordnet ist, die über den Stellabschnitt bewegbar ist. In diesem Fall ist in axialer Längsrichtung der Ventileinrichtung mit Merkmalen gemäß der Erfindung gesehen, die Betätigungseinrichtung nicht zwischen dem Ventil und dem Thermostatabschnitt vorgesehen, sondern erst im Anschluß an den Thermostatabschnitt, wobei über die stempelartige Einrichtung der Thermostatabschnitt in Richtung des Ventils bewegbar ist. Auch bei dieser Anordnung ist zwischen dem Thermostatabschnitt und dem Ventilstößel eine Federkammer mit einer Überhubfeder vorgesehen, wie dies voranstehend in Verbindung mit einer anderen Ausführungsform bereits beschrieben worden ist.

Dabei ist die Stempeleinrichtung bevorzugt als ein Ende der Stellspindel ausgebildet. Die Stellspindel kann bei dieser Ausführungsform ein Kegelzahnrad aufweisen, das über die Betätigungseinrichtung betätigbar ist.

Bei dieser Variante mit Merkmalen gemäß der Erfindung ist es zweckmäßig, wenn die Betätigungseinrichtung einen Drehstellknopf umfaßt, der mit einer Zahnung einer Übertragungsanordnung kämmt, die mit dem Kegelzahnrad im Eingriff steht.

Wie voranstehend bereits angedeutet, ergibt sich eine besonders vorteilhafte und wirtschaftliche Ausführungsform, wenn der Ventilabschnitt ein übliches Ventil ist, das in Stückzahlen von Millionen hergestellt wird.

Des weiteren ist es besonders zweckmäßig, wenn der Thermostatabschnitt mit der Stellübertragungsmechanik in einem an dem Ventil befestigbaren Gehäuse untergebracht ist. Besonders vorteilhaft verläuft dieses Gehäuse axial oder sogar koaxial zu dem Ventil bzw. dessen Ventilstößel mit dem darin angesetzten Ventilteller.

Um die angestrebte Zugänglichkeit von außerhalb einer Verkleidung gewährleisten zu können, ist es besonders zweckmäßig, wenn die Betätigungseinrichtung radial von dem Gehäuse wegsteht. Das heißt, die gesamte Ventileinrichtung gemäß der Erfindung nebst Betätigungseinrichtung und Gehäuse mit dem darin befindlichen Thermostatabschnitt und der Stellübertragungsmechanik kann hinter einer Verkleidung bzw. hinter einer Blende verborgen werden, während eine uneingeschränkte Zugänglichkeit für den Benutzer über die Betätigungseinrichtung beibehalten werden kann.

Nachfolgend wird die Erfindung anhand von bevorzugten Ausführungsformen näher erläutert. Dabei werden unter Bezugnahme auf die beigefügten Darstellungen weitere Merkmale, Zielsetzungen und Vorteile der Erfindung offenbart, in denen:
- Fig. 1: eine teilweise Schnittdarstellung entlang der Längsachse durch eine Ausführungsform der Ventileinrichtung gemäß der Erfindung ist;
- Fig. 2: eine teilweise Schnittdarstellung durch eine weitere Ausführungsform mit Merkmalen gemäß der Erfindung ist;
- Fig. 3: eine weitere Ausführungsform darstellt, die entsprechend den Fig. 1 und 2 dargestellt ist;
- Fig. 4: eine teilweise Schnittdarstellung entlang der Längsachse einer weiteren Ausführungsform ist;
- Fig. 5: eine weitere Ausführungsform zeigt, die entsprechend Fig. 1 bis 4 dargestellt ist; und
- Fig. 6: eine letzte Ausführungsform mit Merkmalen gemäß der Erfindung in einer Darstellungsweise gemäß den voranstehenden Ausführungsformen ist.

In den Darstellungen sind gleiche oder wenigstens funktionsgleiche Bestandteile mit entsprechenden Bezugszeichen versehen (116 entspricht 316 entspricht 616 usw.).

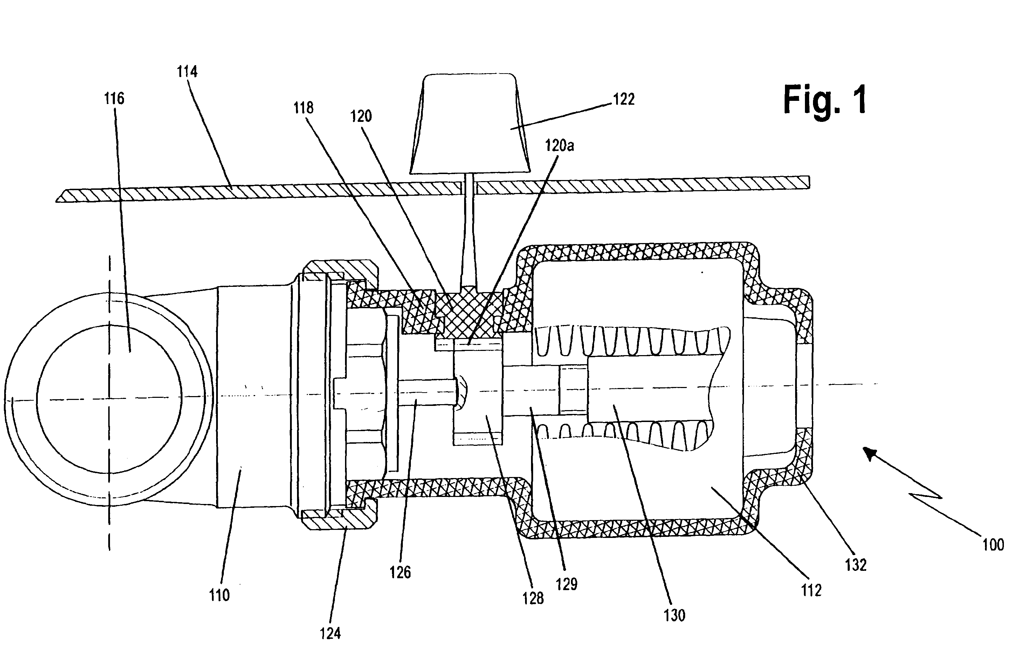

Die Fig. 1 zeigt eine erste Ausführungsform einer Ventileinrichtung 100, die hinter einer Verkleidung bzw. einer Blende 114 eines Design-Heizkörpers (nicht dargestellt) verborgen sein kann.

Aus der Verkleidung schaut lediglich eine Betätigungseinrichtung 122 hervor, die als Schieberegler ausgestaltet ist und über die die Ventileinrichtung 100 eingestellt werden kann.

Die Ventileinrichtung 100 umfaßt einen Ventilabschnitt 110 mit einem Vor- bzw. Rücklauf 116 für das Ventil. Der Ventilabschnitt 110, insbesondere ein herkömmliches Heizkörperanschlußventil, ist über eine Verbindungseinrichtung 124, insbesondere eine Überwurfmutter 124, an einem Gehäuse 132 befestigt.

Das Gehäuse 132 enthält eine Thermostatpatrone bzw. Dehnkapsel 112, die ebenfalls in herkömmlicher Weise ausgebildet ist. Die Dehnkapsel 112 kann ohne Bewegungsspielraum oder gegebenenfalls auch mit Bewegungsspielraum in dem Gehäuse 132 aufgenommen sein.

Der Schieberegler 122 greift an einer Zahnstange 120 an, die in einer Zahnstangenführung 118 sitzt, die beispielsweise einstückig mit dem Gehäuse 132 ausgebildet sein kann. Durch eine Betätigung des Schiebereglers 122 wird die Zahnstange 120 verschoben, wodurch ein Ende einer Spindel 128, 129, das als Zahnrad ausgebildet ist, in eine Drehbewegung versetzt wird, so daß sich die Spindelabschnitte 128, 129, je nach Bewegungsrichtung des Schiebereglers 122 in Axialrichtung der Spindel 128, 129 verlängern oder verkürzen.

Das ventilseitige Ende der Spindel bzw. Stellspindel 128, 129 ist gegenüber einem Ventilstift 126 des Ventilabschnitts 110 abgestützt, während je nach thermisch bedingtem Zustand der Dehnkapsel 112 das andere Ende der Stellspindel 128, 129 gegenüber der Dehnkapsel frei oder auch abgestützt sein kann.

Die Zahnung 120a der Zahnstange 120 kann in Axialrichtung der erfindungsgemäßen Ventileinrichtung länger ausgebildet sein als die Zahnung 120a des Zahnrades 128 der Stellspindel 128, 129. Auf diese Weise kann der Ventilstift bzw. der Ventilstößel 126 in Axialrichtung sowohl durch eine thermische Ausdehnung des Thermostatabschnitts 112 als auch durch die Betätigung des Schiebereglers 122 verstellt werden, ohne daß die Zahnung der Zahnstange 120 und die Zahnung des Zahnrades 128 der Stellspindel außer Eingriff gelangen können.

Um den Bewegungsspielraum der Stellspindel 128, 129 gegenüber der Dehnkapsel bzw. dem Thermostatabschnitt 112 einzuschränken, kann in die Dehnkapsel 112 ein Zylinderabschnitt 130 eingesetzt sein.

Das Gehäuse 132 sollte vorteilhafterweise einen thermischen Kontakt zur Raumluft begünstigen, indem beispielsweise Lüftungsschlitze oder dergleichen vorgesehen sind.

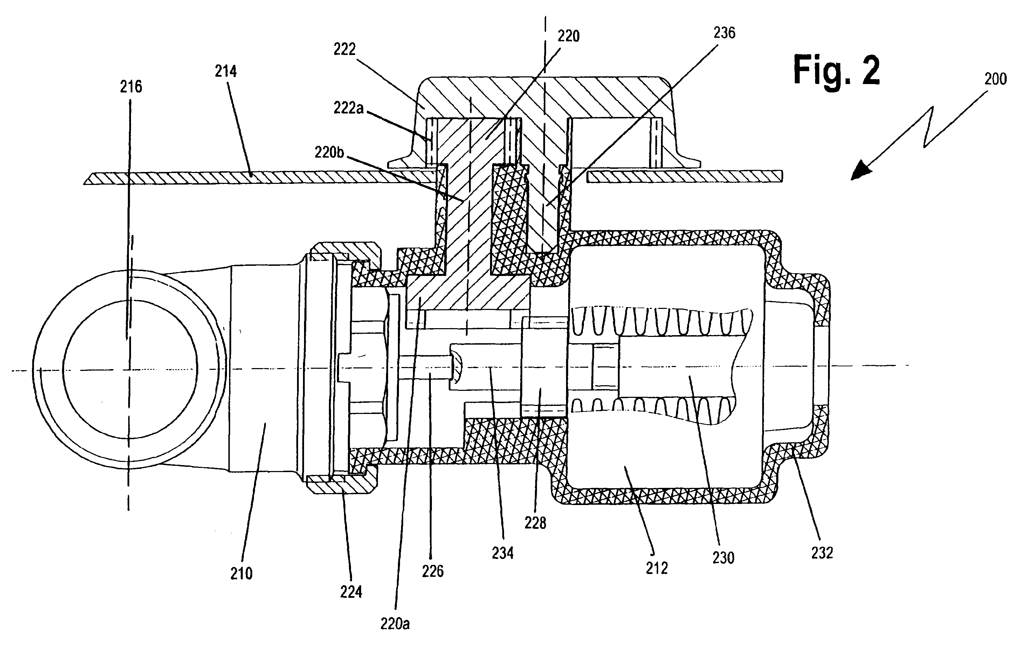

In Fig. 2 ist eine weitere Ausführungsform mit Merkmalen gemäß der Erfindung durch das Bezugszeichen 200 gekennzeichnet. Die Ventileinrichtung 200 weist prinzipiell die gleichen Bestandteile auf, wie die Ventileinrichtung 100 gemäß Fig. 2, wobei jedoch die Stellübertragungsmechanik mit der zugehörigen Betätigungseinrichtung abweichend ausgebildet sind.

Gemäß der Ausführungsform 200 nach Fig. 2 wird eine als Drehstellknopf 222 ausgebildete Betätigungseinrichtung zum Einsatz gebracht. Der Drehstellknopf 222 ist an seiner Achse 236 in einem entsprechenden Verankerungsabschnitt eines Gehäuses 232 festgesetzt.

Auch hier ist zwar die Ventileinrichtung 200 hinter einer Verkleidung 214 verborgen, jedoch ist die Betätigungseinrichtung 222 von außerhalb der Verkleidung 214 erreichbar und die Ventileinrichtung bzw. das Thermostatventil 200 damit einstellbar. An einer Innenfläche des Drehstellknopfes 222 ist eine Zahnung 222a vorgesehen, die mit einem Zahnrad 220 einer Übertragungseinrichtung kämmt. Die Übertragungseinrichtung weist eine Achse auf, die sich in das Gehäuse 232 der Ventileinrichtung 200 erstreckt. Am Ende der Übertragungsachse 220b ist wiederum ein Zahnrad, hier ein Kronenzahnrad 220a, angeordnet, dessen Zahnung mit einer Zahnung der Stellspindel 228, 234 kämmt.

Durch eine Drehung des Drehstellknopfes 222 wird damit die Stellspindel 228, 234 in Axialrichtung der Ventileinrichtung 200 verlängert oder verkürzt, so daß eine Einstellung von einer Bedienperson vorgenommen werden kann.

Zu erwähnen ist noch, daß die Zahnung des Zahnrades 228 der Stellspindel 228, 234 durch die Zahnung des Kronenzahnrades 220a hindurchgleiten kann, wobei über den gesamten Stellbereich des Ventilabschnitts 210 in Verbindung mit dem Stellbereich einer Dehnkapsel 212 des Thermostatabschnitts ein Kontakt gewährleistet ist, so daß in jeder Einstellung der Stellspindel 228, 234 eine Bedienperson Einfluß nehmen kann.

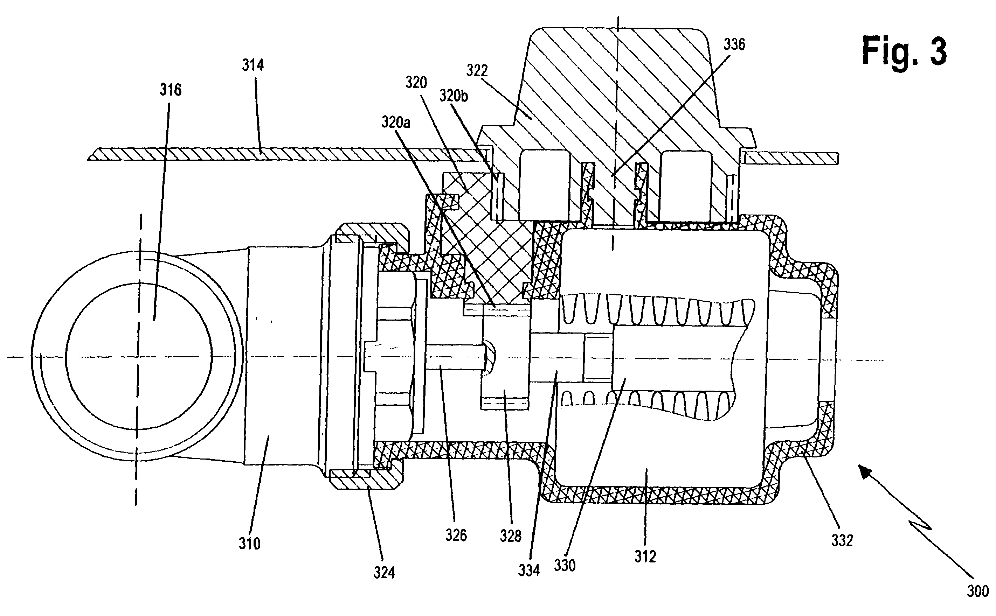

Auch bei der Ausführungsform gemäß Fig. 3, die allgemein durch das Bezugszeichen 300 gekennzeichnet ist, sind lediglich im Hinblick auf die Stellübertragungsmechanik und die Betätigungseinrichtung Unterschiede zu den Ausführungsformen 100 und 200 zu bemerken.

Auch hier wird als Betätigungseinrichtung ein Drehstellknopf 322 verwendet, der über eine Drehachse 336 in einem entsprechenden Verankerungsabschnitt des Gehäuses 332 drehbar sitzt. Am Außenumfang des Drehstellknopfes 322 ist eine Zahnung 320b, die bereits jenseits einer Verkleidung 314 an dem Heizkörper (nicht dargestellt) plaziert ist. Die Zahnung 320b des Drehstellknopfes 322 kämmt mit einer entsprechenden Zahnung einer Zahnstange 320. Durch Drehen des Drehstellknopfes 322 wird folglich die Zahnstange 320 in die Bildebene hinein oder aus dieser heraus bewegt.

An dem radial nach innen ausgerichteten Ende der Zahnstange 320, das der Längsachse der Ventileinrichtung 300 näher liegt, kämmt eine weitere Zahnung 320a der Zahnstange 320 mit der Zahnung eines Zahnrades 328 der Stellspindel 328, 334.

Dementsprechend wird bei einer Verstellung des Drehstellrades 322 die Drehbewegung in eine lineare Bewegung der Zahnstange 320 umgewandelt. Die lineare Bewegung der Zahnstange 320 wird anschließend über die Zahnung 320a wiederum in eine Drehbewegung des Zahnrades 328 der Stellspindel 328, 334 gewandelt. Über diesen Übertragungsweg kann die Stellspindel 328, 334 in Axialrichtung der Ventileinrichtung 300 verlängert bzw. verkürzt werden, um den Ventilstift 326 einzustellen bzw. den Freiraum zwischen der Dehnkapsel 312 und dem Ventilstift 326 zu vergrößern oder zu verringern.

Bei der Ausführungsform 300 gemäß Fig. 3 kann je nach Einbauwunsch entweder der dargestellte Drehknopf 322 eingesetzt werden, oder es kann eine weitere Möglichkeit aufgegriffen werden, um dieses Ventil zu betätigen. Bei dieser wird ein Schieberegler vorgesehen, der an der Zahnung 320b der Zähnstange 320 angreift. Je nach dem, ob der Drehknopf 322 oder der (nicht dargestellte) Schieberegler verwendet wird, kann eine passende Ausnehmung in der Verkleidung 314 eingerichtet werden.

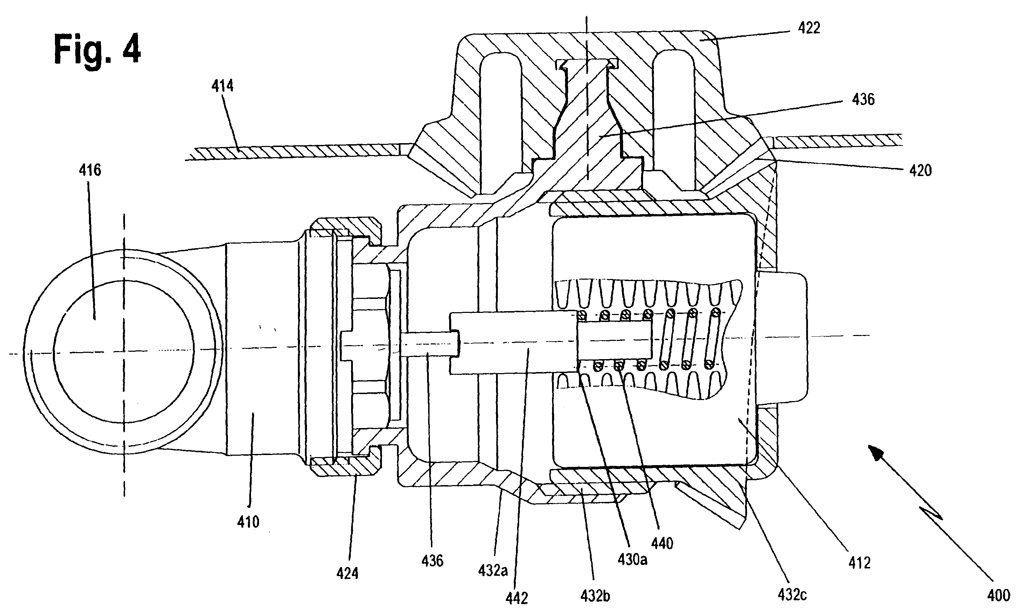

Bei der Ausführungsform gemäß Fig. 4 ist bei der Ventileinrichtung 400 gemäß einer weiteren Ausführungsform nach der Erfindung eine Dehnkapsel 412 insgesamt gegenüber einer Ventileinrichtung 410 bzw. deren Ventilstift 436 beweglich.

Die Dehnkapsel 412 ist in einer Büchse 432 aufgenommen, die gleichzeitig Teil des Gehäuses ist, wobei hier das Gehäuse 432a, 432b, 432c nicht einstückig starr ausgebildet ist, sondern zur Übernahme der Funktion der Stellspindel gemäß den Ausführungsformen nach den Fig. 1 bis 3 mehrteilig ausgebildet ist. Hierzu weist der Gehäuseabschnitt 432c eine Zahnung 420 am Außenumfang auf, die mit einer entsprechenden Zahnung eines Drehstellknopfes 422 kämmt. Der Drehstellknopf 422 ist auf einem Dorn 436 festgerastet, der an einem gegenüber dem Ventilabschnitt 417 starr montierten Gehäuseabschnitt 432a festgelegt ist bzw. mit diesem einstückig ausgebildet ist. Zwischen dem beweglichen Gehäuseabschnitt 432c und dem feststehenden Gehäuseabschnitt 432a ist ein Führungsabschnitt 432b vorgesehen, so daß durch eine Drehbewegung, die auf den beweglichen Gehäuseabschnitt 432c übertragen wird, eine Verschiebung der Dehnkapsel 412 in axialer Längsrichtung der Ventileinrichtung 400 durchgeführt werden kann. Hierbei ist es erforderlich, daß der Zahnungsabschnitt 420 an dem Drehstellknopf 422 bzw. an dem beweglichen Gehäuseabschnitt 432c in axialer Längsrichtung mit einem entsprechenden Spielraum ausgebildet ist, so daß die Zahnung des Drehstellknopfes 422 gegenüber der Zahnung des Gehäuseabschnitts 432c in jeder erforderlichen Einstellposition einerseits Kontakt haben kann, um eine Einstellung zu ermöglichen, und andererseits die Zahnungen einer Bewegung des beweglichen Gehäuseabschnitts 432c nicht im Wege steht, wenn der Gehäuseabschnitt in axialer Längsrichtung auf den Ventilstift bzw. Ventilstößel 436 zu bewegt wird.

Zwischen dem Ventilstößel 436 und der Dehnkapsel 412 ist eine Federeinrichtung 440 vorgesehen, die zwischen der Dehn- bzw. Thermostatkapsel und dem Ventilteller des Ventils 410 angreift, um als Überhubfeder zu dienen. Zwischen der Dehnkapsel 412 bzw. der Überhubfeder 440 und dem Ventilstößel 436 ist ein Übertragungsabschnitt 442 vorgesehen, der einen Schulterabschnitt 430a aufweist, an dem die Federeinrichtung 440 anliegt. In dieser Stellung dient die Federeinrichtung dazu, um Kräfte, die von der Dehnkapsel 412 ausgehen, zu kompensieren, wenn der Ventilteller des Ventils bereits in seiner vollständig geschlossenen Position ist.

Eine Drehbewegung des Drehstellknopfes 422 kann folglich über die Zahnung 420 auf den beweglichen Gehäuseabschnitt 432c in eine Linearbewegung in axialer Längsrichtung der Ventileinrichtung 400 umgesetzt werden, um Einfluß auf die Stellung des Ventilstößels 436 und damit des Ventiltellers (nicht dargestellt) innerhalb des Ventilabschnitt 410 zu nehmen.

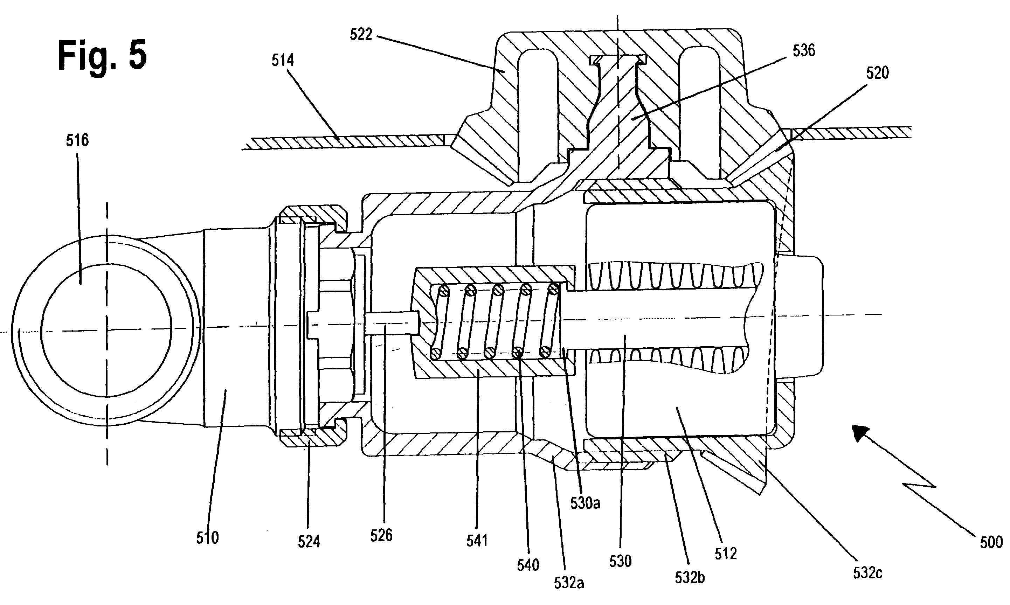

Bei der Ausführungsform einer Ventileinrichtung 500 mit Merkmalen gemäß der vorliegenden Erfindung nach der Fig. 5 ist prinzipiell die Funktionsweise gleichermaßen festzuhalten, wie bei der Ausführungsform 400 gemäß Fig. 4.

Abweichend zu Fig. 4 ist die Federeinrichtung als eine Federeinrichtung 540 in einer Federkammer 541 vorgesehen, wobei dieser Feder 540 jedoch prinzipiell die gleiche Funktion zukommt, wie die Feder 440 gemäß Fig. 4.

Ein Stößel 530 des Thermostatabschnitts bzw. der Dehnkapsel 512 weist einen Schulterabschnitt 530a auf, der in Richtung entgegengesetzt zu dem Ventilabschnitt 510 im Eingriff mit der Federkammer 541 ist. In Richtung des Ventilabschnitts 510 wirkt der Schulterabschnitt 530a als Stempel, der dazu in der Lage ist, die Federeinrichtung 540 zu verformen.

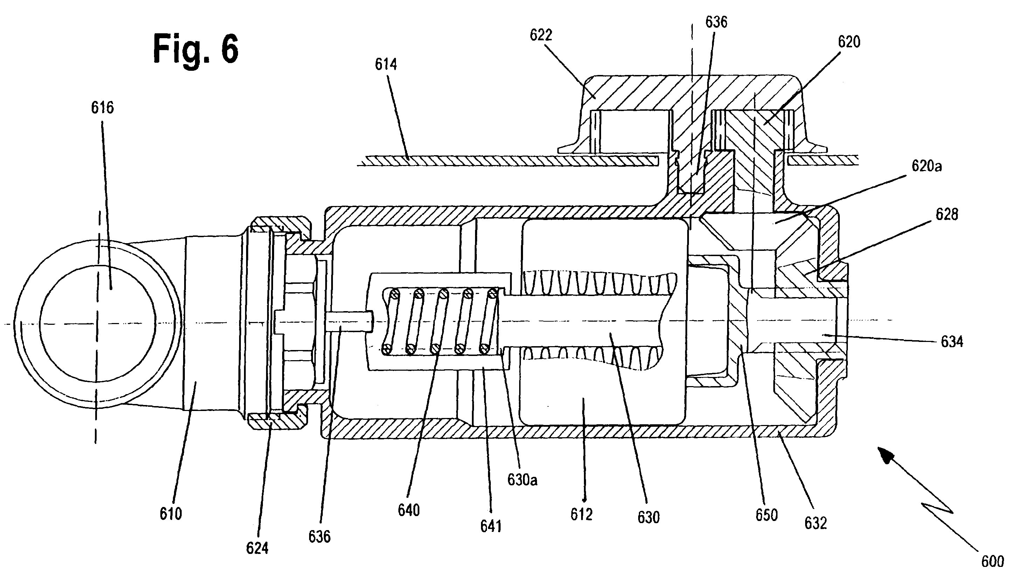

Bei der Ausführungsform einer Ventileinrichtung 600 gemäß Fig. 6 ist der Thermostatabschnitt bzw. ist die Dehnkapsel 612 ebenfalls insgesamt beweglich, wobei die Anordnung mit einer Federkammer 641, einer Überhubfeder 640, einem Stößel 630 gegenüber dem Ventilstift bzw. Ventilstößel 636 prinzipiell mit der gemäß Fig. 5 übereinstimmt.

Abweichend ist gemäß Fig. 6 eine Stellspindel 628, 634 hinter der Dehnkapsel 612 angebracht.

Die Stellspindel 634, 628 weist an dem kapselseitigen Ende eine Stempeleinrichtung 650 auf, die auf die Dehnkapsel 612 einwirken kann. Der Abschnitt 628 der Stellspindel 634, 628 ist als ein Kegelzahnrad 628 ausgebildet, dessen Zahnung mit der Zahnung eines entsprechenden Kegelzahnrads 628a kämmt, das über eine starre Achse mit einem Zahnrad 620 verbunden ist, welches wiederum mit der Zahnung am Innenumfang eines Drehstellknopfes 622 kämmt.

Die Funktion dieser Stellübertragungsmechanik ist prinzipiell die gleiche, wie bei den Ausführungsformen gemäß den Fig. 1 bis 3, wobei jedoch die Stellspindel nicht zwischen dem Ventilstift bzw. dem Ventilstößel 636 und dem Thermostatabschnitt 612 zur Wirkung kommt, sondern erst im Anschluß an die Thermostatkapsel 612.

## Patentansprüche

1. Ventileinrichtung, insbesondere für Heiz- bzw. Kühlkörper,
mit einem Ventilabschnitt (110 bis 610) mit einem Ventilstift (136 bis 636),
mit einem Stellabschnitt mit einer Betätigungseinrichtung (122 bis 622), wobei
die Betätigungseinrichtung in einem Winkel von ca. 90° zu dem Ventilstift angeordnet ist, wobei eine Stellübertragungsmechanik vorgesehen ist, um eine mit dem Stellabschnitt vorgenommene Einstellung auf den Ventilstift (136 bis 636) zu übertragen, wobei die Stellübertragungsmechanik eine Stellspindel (128, 129) umfasst.

2. Ventileinrichtung nach Anspruch 1, dadurch **gekennzeichnet,** dass ein Thermostatabschnitt (112 bis 612) vorgesehen ist, den die in ihrer Position bzw. Länge verstellbare Stellspindel der Stellübertragungsmechanik zugeordnet ist, über welche die relative Position des Thermostatabschnitts gegenüber dem Ventilstift bzw. die Stellung des Ventilstiftes durch Betätigung der Spindel veränderbar ist, wobei bevorzugt entweder die Stellspindel zwischen dem Thermostatabschnitt und dem Ventilstift angeordnet ist, oder der Thermostatabschnitt an den Ventilstift anschließt und die Stellspindel auf den Thermostatabschnitt einwirkt, welcher auf den Ventilstift einwirkt.

3. Ventileinrichtung nach Anspruch 2, dadurch **gekennzeichnet,** dass zwischen dem Thermostatabschnitt und dem Ventilstößel eine Federeinrichtung (440; 540; 640) vorgesehen ist.

4. Ventileinrichtung nach einem der Ansprüche 1 bis 3, dadurch **gekennzeichnet,** dass der Stellabschnitt eine Zahnstange (120; 320) umfasst, über die auf die Stellspindel insbesondere mittels eines Zahnrades (128) eingewirkt wird, wobei insbesondere die Betätigungseinrichtung als Schieberegler ausgebildet ist, die an die Zahnstange (120) angesetzt ist, oder die Zahnstange eine weitere Zahnung (320b) umfasst, die mit einer Zahnung an der als ein Drehstellknopf (322) ausgebildeten Betätigungseinrichtung kämmt.

5. Ventileinrichtung nach einem der Ansprüche 1 bis 4, dadurch **gekennzeichnet,** dass die Stellspindel (432b, 432c) den Thermostatabschnitt umgibt und durch Verstellen der Betätigungseinrichtung (422) der Thermostatabschnitt in Richtung des Ventilstößels bewegbar ist, wobei die Betätigungseinrichtung bevorzugt einen Drehstellknopf mit einer Zahnung aufweist, die mit einer Zahnung (420) an einem Stellspindelabschnitt (432c) kämmt.

6. Ventileinrichtung nach Anspruch 5, dadurch **gekennzeichnet,** dass die Federeinrichtung (440) an einem Schulterabschnitt (442) zwischen dem Thermostatabschnitt (412) und dem Ventilstößel, insbesondere mit Vorspannung, anliegt, oder eine Federkammer (541) vorgesehen ist, die im Eingriff mit einem Thermostatstößel ist und die die Federeinrichtung (540) aufnimmt, wobei insbesondere die Federkammer auf den Ventilstößel (526) einwirkt.

7. Ventileinrichtung nach Anspruch 5, dadurch **gekennzeichnet,** dass auf der Seite des Thermostatabschnitts (612), die dem Ventil (610) abgewandt ist, eine Stempeleinrichtung (650) angeordnet ist, die über den Stellabschnitt (620, 620a, 620b) bewegbar ist, wobei bevorzugt die Stempeleinrichtung (650) ein Ende der Stellspindel (628, 634) darstellt.

8. Ventileinrichtung nach Anspruch 7, dadurch **gekennzeichnet,** dass eine Federkammer (641) vorgesehen ist, die im Eingriff mit einem Thermostatstößel ist und die die Federeinrichtung (640) aufnimmt, wobei bevorzugt die Federkammer auf den Ventilstößel (626) einwirkt.

9. Ventileinrichtung nach einem der Ansprüche 1 bis 8, dadurch **gekennzeichnet,** dass der Thermostatabschnitt mit der Stellübertragungsmechanik in einem an dem Ventil befestigbaren Gehäuse (132 bis 632) aufgenommen ist, das bevorzugt axial bzw. koaxial zu dem Ventil verläuft.

10. Ventileinrichtung nach Anspruch 9, dadurch **gekennzeichnet,** dass die Betätigungseinrichtung (122 bis 622) radial von dem Gehäuse (132 bis 632) wegsteht.
